# EUROPEAN PATENT SPECIFICATION

(11) **EP 1 533 821 B1**
(45) Date of publication and mention of the grant of the patent: **10.01.2007**
(21) Application number: 04027579.4
(22) Date of filing: 19.11.2004
(51) Int. Cl.: H01H 9/02, H02B 1/048

(54) **Support device, in particular for electric fittings such as switches and the like**
Halteeinrichtung, insbesondere für elektrische Geräte wie z. B. Schalter
Dispositif de support, en particulier pour accessoires électriques comme les interrupteurs

(30) Priority: 20.11.2003 IT MI20030540 U
(43) Date of publication of application: 25.05.2005
(73) Proprietor: CANALPLAST S.P.A., 20124 Milano (IT)
(72) Inventor: Villi, Piergiorgio, 20051 Limbiate Milano (IT)
(74) Representative: Cicogna, Franco

(56) References cited:
- EP-A- 0 470 471
- DE-A1- 19 716 906
- GB-A- 2 253 518
- US-A- 4 105 883

## Description

### BACKGROUND OF THE INVENTION

The present invention relates to a support device specifically designed for electric fittings or devices, such as switches, breakers and the like.

As is known, electric fittings or devices, such as differential switches or breakers, the so-called "lifeguard devices" and other drive and control devices, have a bottom which is so shaped or contoured as to be snap engaged to a suitable section member, the so-called "omega guide" which is in turn clamped, by clamping screws, to a support element typically comprising the bottom portion of a suitable container or electric board or panel.

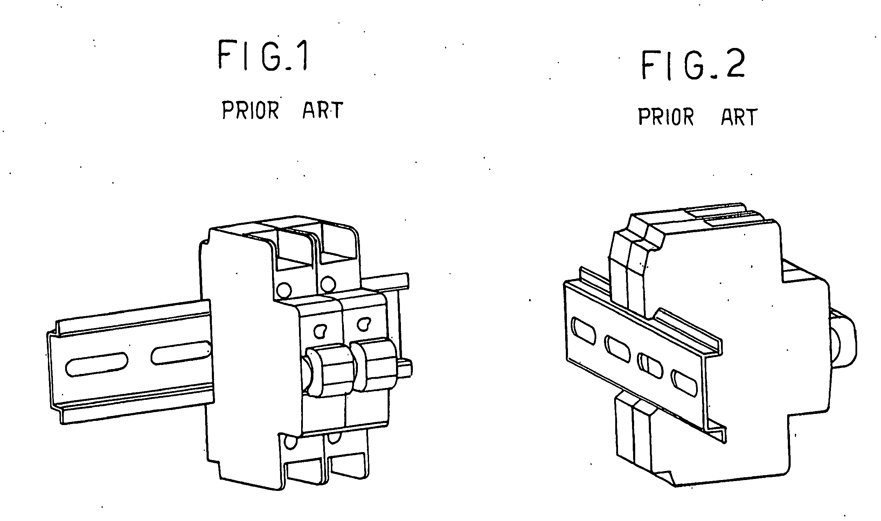

Such a system including the above mentioned "omega guide" has been schematically shown in figures 1 and 2.

The above omega guide system has been found to be operatively reliable and advantageous: however, it would be further advantageous to provide a further improved system for other specific applications, i.e. which is further improved both from the aesthetic and functional standpoints.

Document DE 197 16 906 discloses a device according to the preamble of claim 1.

### SUMMARY OF THE INVENTION

Accordingly, the aim of the present invention is to provide an improved support device for supporting switches and other available electric fittings or devices.

Within the scope of the above mentioned aim, a main object of the invention is to provide such a supporting device which is operatively more reliable than the above mentioned prior omega guide system.

Yet another object of the present invention is to provide such a support device which is very simple and reliable construction-wise.

Yet another object of the present invention is to provide such a support device which is also adapted to exploit the omega-shape recess provided on a rear side of a lot of electric fittings or devices.

Yet another object of the present invention is to provide such a support device which can be easily made starting from easily available materials and methods.

According to one aspect of the present invention, the above mentioned aim and objects, as well as yet other objects, which will become more apparent hereinafter, are achieved by a support device according to claim 1.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative but not limitative example, in the accompanying drawings, where:
Figure 1 is a front perspective view of an electric fitting or device, associated with a conventional type of omega guide;
Figure 2 is a rear perspective view of the electric fitting or device shown in the preceding figure, associated with a conventional type of omega guide;

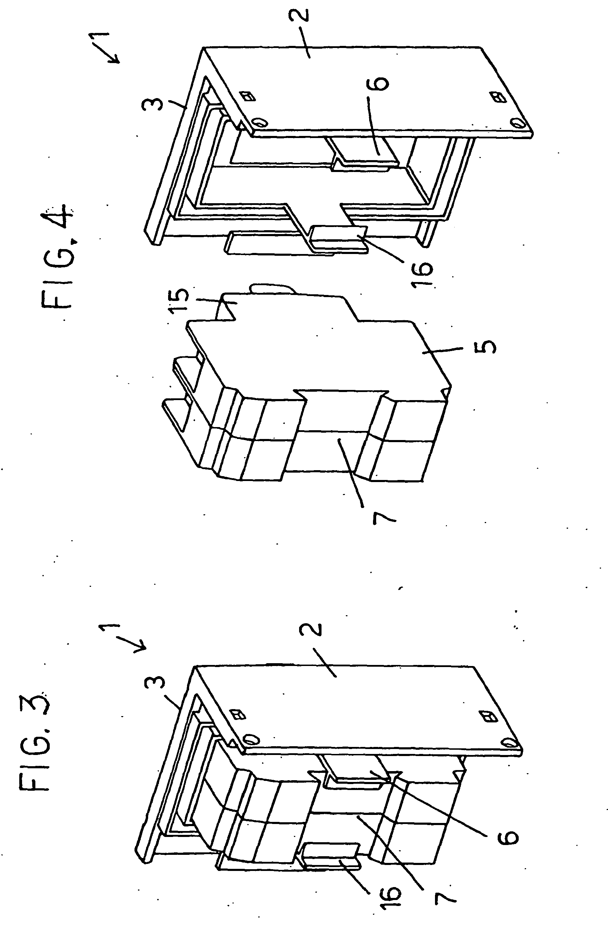

Figure 3 is a further rear perspective view of an electric fitting or device associated with a support device according to the present invention;
Figure 4 is a further rear exploded perspective view of the electric fitting or device associated with the support device of the preceding figure;

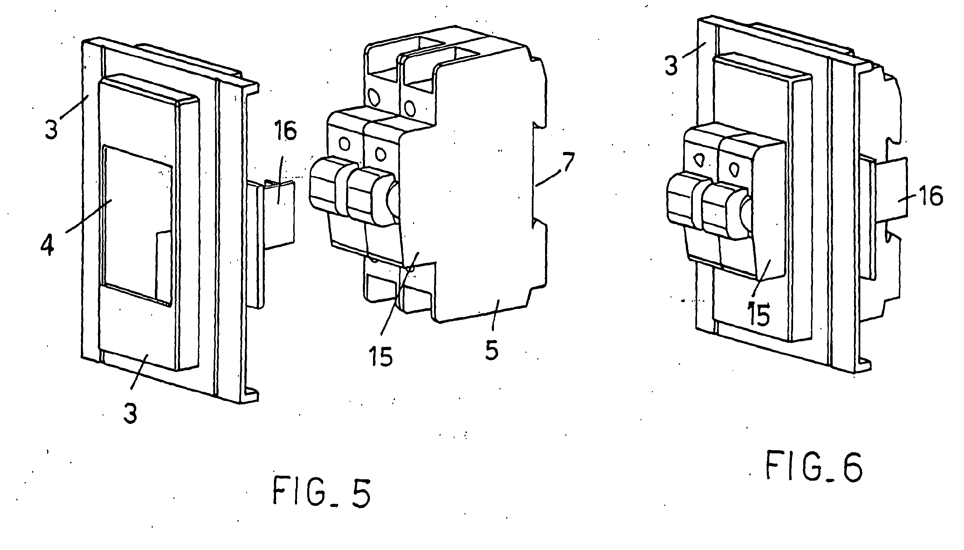

Figure 5 is a front exploded perspective view of the electric fitting associated with the support device of the preceding figure; and
Figure 6 is a front perspective view, in an assembled condition, of the electric fitting associated to the support device of the preceding figure.

### DESCRIPTION OF THE PREFERRED EMBODIMENT

With reference to the number references of the above mentioned figures, the support device, according to the invention, which has been generally indicated by the reference number 1, comprises a locking portion 2, a front portion 3, including an opening 4 for an electric fitting or device 5, and at least a bracket element 6 designed for engaging a shaped or contoured bottom portion 7 of the electric fitting 5 to lock the latter at a desired operating position.

More specifically, said locking portion comprises a plate element 2, on which is formed, as a single body, a bracket 6 and a front portion 3 in turn including a second bracket 16.

The opening 4 of the front portion 3 is adapted to receive a projecting portion 15 of an electric fitting 5, whereas the brackets 6 and 16 snap engage the contoured or shaped bottom 7 of the switch or breaker itself.

While the figures show the application to two adjoining devices 5, the support device 1 according to the present invention can also support a different number of adjoining devices or fittings 5.

The plate portion, or locking portion 2, can be made in different configurations, and can be clamped in different clamping housings, even suitably arranged.

It has been found that the invention fully achieves the intended aim and objects.

In fact, the invention provides a support device for electric fittings, such as differential breakers and so on, which constitutes an alternative embodiment with respect to the conventional omega-guide system.

## Claims

1. A support device (1) adapted to support an outer housing of an electric fitting such as a switch, breaker (5) and the like, said outer housing having a shaped bottom (7) and a projecting portion (15), said support device comprising a locking portion (2) which is adapted to be coupled to a fixed support element, a front portion (3) including an opening (4) adapted to receive said projecting portion of said housing of said electric fitting, and a first and second bracket elements (6, 16) adapted to engage said shaped bottom (7) of said housing of said electric fitting and to lock the latter, **characterized in that** said locking portion (2) and said front portion (3) comprise two integral plate elements (2, 3) arranged with a substantially L-shape configuration, said first bracket element (6) being integral with said locking portion and said second bracket element (16) being integral with said front portion (3).

2. A support device according to claim 1, **characterized in that** said first an second bracket elements comprise each a strip element having a tongue portion for snap engaging said shaped bottom (7) of said housing of said electrical fitting.

3. A support device according to claims 1 and 2, **characterized in that** said shaped bottom (7) has a substantially omega-shape.

## Patentansprüche

1. Halteeinrichtung (1), die ausgebildet ist, um ein äußeres Gehäuse eines elektrischen Geräts, beispielsweise eines Schalters, Trennschalters (5) und dergleichen, zu halten, wobei das äußere Gehäuse einen profilierten Boden (7) und einen vorragenden Abschnitt (15) aufweist, wobei die Halteeinrichtung einen Arretierabschnitt (2), der ausgebildet ist, um mit einem festen Halteelement gekoppelt zu werden, einen vorderen Abschnitt (3), der eine Öffnung (4) aufweist, welche ausgebildet ist, um den vorragenden Abschnitt des Gehäuses des elektrischen Geräts aufzunehmen, und ein erstes und ein zweites Klammerelement (6, 16), die ausgebildet sind, um mit dem profilierten Boden (7) des Gehäuses des elektrischen Geräts in Eingriff zu gelangen und letzteres zu arretieren, umfasst, **dadurch gekennzeichnet, dass** der Arretierabschnitt (2) und der vordere Abschnitt (3) zwei einstückige Plattenelemente (2, 3) umfassen, welche in einer im Wesentlichen L-förmigen Konfiguration angeordnet sind, wobei das erste Klammerelement (6) mit dem Arretierabschnitt einstückig ausgebildet ist und das zweite Klammerelement (16) mit dem vorderen Abschnitt (3) einstückig ausgebildet ist.

2. Halteeinrichtung nach Anspruch 1, **dadurch gekennzeichnet, dass** das erste und das zweite Klammerelement jeweils ein Leistenelement mit einem Zungenabschnitt zum Eingreifen mit dem profilierten Boden (7) des Gehäuses des elektrischen Geräts durch Einschnappen umfassen.

3. Halteeinrichtung nach Anspruch 1 und 2, **dadurch gekennzeichnet, dass** der profilierte Boden (7) in Wesentlichen omegaförmig ist.

## Revendications

1. Dispositif de support (1) conçu pour supporter un boîtier extérieur d'un accessoire électrique tel qu'un commutateur, un disjoncteur (5) et autres, ledit boîtier extérieur comportant une partie de fond façonnée (7) et une partie en saillie (15), ledit dispositif de support comprenant une partie d'immobilisation (2) qui est conçue pour être reliée à l'élément de support fixe, une partie avant (3) comprenant une ouverture (4) conçue pour recevoir ladite partie en saillie dudit boîtier dudit accessoire électrique, et un premier et un second éléments d'attache (6, 16) conçus pour s'engager avec ladite partie de fond façonnée (7) dudit boîtier dudit accessoire électrique et pour immobiliser ce dernier, **caractérisé en ce que** ladite partie d'immobilisation (2) et ladite partie avant (3) comprennent deux éléments de plaques solidaires (2, 3) agencées avec une configuration sensiblement en forme de L, ledit premier élément d'attache (6) étant solidaire de ladite partie d'immobilisation et ledit second élément d'attaque (16) étant solidaire de ladite partie avant (3).

2. Dispositif de support selon la revendication 1, **caractérisé en ce que** lesdits premier et second éléments d'attache comprennent chacun un élément de bande ayant une partie de languette pour un engagement par encliquetage avec ladite partie de fond façonnée (7) dudit boîtier dudit accessoire électrique.

3. Dispositif de support selon les revendications 1 et 2 **caractérisé en ce que** ladite partie de fond façonnée (7) présente une forme pratiquement en omega.
